# EUROPÄISCHE PATENTSCHRIFT

(11) **EP 1 245 445 B1**
(45) Veröffentlichungstag und Bekanntmachung des Hinweises auf die Patenterteilung: **10.08.2005**
(21) Anmeldenummer: 02006172.7
(22) Anmeldetag: 19.03.2002
(51) Int. Cl.: B60R 1/00

(54) **Vorrichtung zur Überwachung des rückwärtigen und seitlichen Raumes eines Fahrzeugs**
Vehicle rear-view and side-view oberservation device
Dispositif pour l'observation de l'arrière et du coté d'un véhicule

(30) Priorität: 25.03.2001 DE 20105153 U
(43) Veröffentlichungstag der Anmeldung: 02.10.2002
(73) Patentinhaber: Dominik, Hans, 72461 Albstadt (DE)
(72) Erfinder: Dominik, Hans, 72461 Albstadt (DE)
(74) Vertreter: Möbus, Daniela, Dr.-Ing.

(56) Entgegenhaltungen:
- DE-A- 19 904 778
- DE-U- 20 008 502
- DE-U- 20 017 064
- US-A- 3 689 695
- US-A- 5 027 200
- US-A- 5 953 168

## Beschreibung

Die Erfindung betrifft eine Vorrichtung zur Überwachung des rückwärtigen und seitlichen Raumes eines Fahrzeugs nach dem Oberbegriff des Anspruchs 1. Eine solche Vorrichtung ist aus der US-A-3 689 695 bekannt.

Beim Rückwärtsfahren von Fahrzeugen, die ein Zugfahrzeug und mindestens einen Anhänger aufweisen, ergibt sich beim Fahren von Kurven ein abgewinkelter Zustand zwischen dem Zugfahrzeug und dem Anhänger. In dieser Stellung ist es dem Fahrer allein mit Hilfe seiner Spiegel nicht mehr möglich, den äußeren seitlichen Raum neben dem Anhänger einzusehen. Auch beim Vorwärtsfahren tritt dieses Problem auf. In dem nicht einsehbaren Bereich können jedoch Hindernisse stationärer oder beweglicher Art wie Gebäudeteile, herannahende Kraftfahrzeuge, Radfahrer, Passanten oder dergleichen auftreten. Diese Hindernisse bedeuten eine potentielle Unfallgefahr für das Fahrzeug.

Aus diesem Grund ist es gesetzlich vorgeschrieben, einen Einweiser zum Rangieren von Fahrzeugen mit Anhängern, insbesondere von Sattelzugfahrzeugen, mitzunehmen bzw. zur Verfügung zu stellen, was jedoch in der Praxis nicht immer einzuhalten ist. Ist der Fahrer allein, so ist er gerade beim Rückwärtsrangieren auf ein mehrfaches Aussteigen und Prüfen der Zugänglichkeit des erforderlichen Raumes angewiesen.

Zur Erleichterung der Rückwärtsfahrt, aber auch der Vorwärtsfahrt von Fahrzeugen mit einem Zugfahrzeug und mindestens einem Anhänger schlägt die vorliegende Erfindung eine Vorrichtung zur Überwachung des rückwärtigen und seitlichen Raumes eines Fahrzeugs, bestehend aus einem Zugfahrzeug und mindestens einem Anhänger, mit mindestens einer Kamera und einem im Zugfahrzeug angeordneten Monitor vor, wobei die mindestens eine Kamera am Zugfahrzeug drehbar angeordnet und automatisch parallel zur Außenseite des Anhängers ausrichtbar ist. Vorzugsweise kann dabei die mindestens eine Kamera im seitlichen Heckbereich des Zugfahrzeugs angeordnet sein, wodurch die Kamera beim Einschlagen des Zugfahrzeugs seitlich gegenüber dem Anhänger vorsteht und somit dem Raum seitlich des Anhängers und teilweise auch hinter dem Anhänger erfassen kann.

Besonders vorteilhaft ist es dabei, wenn die Verstellung der mindestens einen Kamera in Abhängigkeit vom Winkel zwischen Zugfahrzeug und Anhänger erfolgt. Dadurch lässt sich die Kamera äußerst präzise und vollautomatisch stets parallel zur Außenseite des Anhängers ausrichten.

Die Verstellung der mindestens einen Kamera kann mechanisch, elektrisch, pneumatisch oder auch hydraulisch erfolgen.

Außerdem kann mindestens eine Lichtquelle vorgesehen sein, die gemeinsam oder getrennt von der mindestens einen Kamera verstellbar angeordnet sein kann. Damit ist die Überwachungseinrichtung auch bei Nacht oder bei schlechten Sichtverhältnisse am Tag einsetzbar.

Die mindestens eine Lichtquelle kann dabei vorzugsweise oberhalb oder unterhalb der mindestens einen Kamera angeordnet sein, da dann der Aufnahmebereich der Kamera besonders gleichmäßig ausgeleuchtet werden kann.

Sinnvollerweise kann an jeder Heckaußenseite des Zugfahrzeugs eine Kamera angeordnet sein, sodass bei Rangierbewegungen sowohl nach links als auch nach rechts und sowohl bei Vorwärtsfahrt als auch bei Rückwärtsfahrt der seitliche Bereich des Anhängers durch die Kamera eingesehen werden kann, indem diese mit dem Zugfahrzeugheck seitlich über die Außenseite des Anhängers ausschwenkt.

Insbesondere, wenn das Zugfahrzeug sehr viel schmaler ist als der Anhänger, ist es vorteilhaft, die mindestens eine Kamera und/oder die mindestens eine Lichtquelle an einem ausfahrbaren oder ausschwenkbaren Träger am Zugfahrzeug anzuordnen, um sicherstellen zu können, dass die Kamera und/oder Lichtquelle unabhängig vom Lenkwinkel stets über die Außenseite des Anhänges vorsteht.

Nachfolgend wird anhand der Zeichnung eine bevorzugte Ausführungsform einer erfindungsgemäßen Vorrichtung näher beschrieben.

Es zeigen:
- Fig. 1: eine Ansicht von oben auf einen Sattelzug;
- Fig. 2: eine Seitenansicht auf den Sattelzug aus Fig. 1.

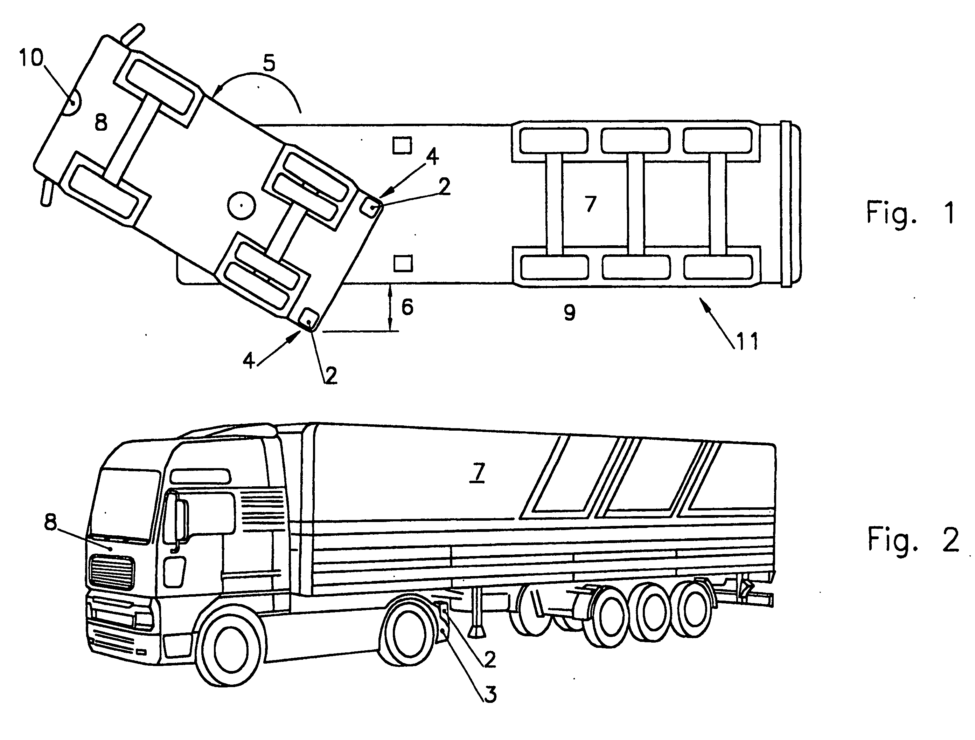

Bei dem in Fig. 1 dargestellten Sattelzug ist die Zugmaschine 8 um den Winkel 5 gegenüber dem Auflieger 7 durch einen entsprechenden Lenkeinschlag des Zugfahrzeugs 8 abgewinkelt. An beiden Seiten 4 des Hecks des Zugfahrzeugs 8 befindet sich eine Kamera 2 und, wie aus Fig. 2 ersichtlich ist, darunter eine Beleuchtungseinrichtung 3. Durch den Winkel 5 zwischen Zugmaschine 8 und Auflieger 7 steht das Kameraelement 2 um den Abstand 6 über die Seitenwand 11 des Aufliegers 7 vor. Dadurch ist es möglich, den Raum 9 seitlich des Aufliegers 7 durch die Kamera 2 zu erfassen. Das Beleuchtungselement 3 sorgt dafür, dass die Kamera 2 auch bei Nacht oder bei schlechten Sichtverhältnissen am Tage eingesetzt werden kann. Im Zugfahrzeug 8 ist ein Monitor 10 im Bereich des Rückspiegels angeordnet, auf dem die Bilder beider oder nur einer der Kameras 2 darstellbar sind.

Bei Fahrzeugen, bei denen das Zugfahrzeug sehr viel schmaler ist als der Anhänger, können die Kameras 2 und/oder die Beleuchtungseinrichtungen 3 auch seitlich ausfahrbar oder ausschwenkbar an einem Träger angeordnet sein, sodass sichergestellt ist, dass die Kameras beim Lenkeinschlag des Zugfahrzeugs seitlich über den Anhänger überstehen.

Zur zuverlässigen Erfassung des Raumes 9 seitlich des Aufliegers 7 ist es außerdem erforderlich, dass die Kamera und/oder die Beleuchtungseinrichtung 3 wenigstens annähernd parallel zum Auflieger 7 ausgerichtet werden. Dies sollte automatisch erfolgen. Dazu kann eine Sensoreinrichtung vorgesehen werden, mit der der Winkel 5 zwischen Zugmaschine 8 und Auflieger 7 erfassbar ist. Abhängig von diesem Winkel 5 wird dann das Kameraelement 2 so nachgeführt, dass es parallel zur Außenseite 11 des Aufliegers 7 ausgerichtet ist. Als Beleuchtungseinrichtungen 3 werden vorzugsweise gerichtete Strahler eingesetzt, um eine Blendung des Fahrers oder auch anderer Verkehrsteilnehmer gering zu halten. Solche gerichteten Strahler müssen jedoch ebenfalls nachgeführt werden, was vorzugsweise gemeinsam mit den Kameraelementen 2 erfolgen kann.

## Patentansprüche

1. Vorrichtung zur Überwachung des rückwärtigen und seitlichen Raumes eines Fahrzeugs bestehend aus einem Zugfahrzeug (8) und mindestens einem Anhänger (7), mit mindestens einer Kamera (2) und einem im Zugfahrzeug (8) angeordneten Monitor (10), wobei die mindestens eine Kamera (2) am Zugfahrzeug (8) drehbar angeordnet ist, **dadurch gekennzeichnet, dass** die mindestens eine Kamera (2) automatisch parallel zur Außenseite des Anhängers (7) ausrichtbar ist.

2. Vorrichtung nach Anspruch 1, **dadurch gekennzeichnet, dass** die mindestens eine Kamera (2) im seitlichen Heckbereich (4) des Zugfahrzeugs (8) angeordnet ist.

3. Vorrichtung nach Anspruch 1 oder 2, **dadurch gekennzeichnet, dass** die Verstellung der mindestens einen Kamera (2) in Abhängigkeit vom Winkel zwischen Zugfahrzeug (8) und Anhänger (7) erfolgt.

4. Vorrichtung nach einem der Ansprüche 1 bis 3, **dadurch gekennzeichnet, dass** die Verstellung der mindestens einen Kamera (2) mechanisch, elektrisch, pneumatisch oder hydraulisch erfolgen kann.

5. Vorrichtung nach einem der Ansprüche 1 bis 4, **dadurch gekennzeichnet, dass** sie mindestens eine Lichtquelle (3) aufweist.

6. Vorrichtung nach Anspruch 5, **dadurch gekennzeichnet, dass** die mindestens eine Lichtquelle gemeinsam oder getrennt von der mindestens einen Kamera (2) verstellbar angeordnet ist.

7. Vorrichtung nach Anspruch 5 oder 6, **dadurch gekennzeichnet, dass** die mindestens eine Lichtquelle (3) oberhalb oder unterhalb der mindestens einen Kamera (2) angeordnet ist.

8. Vorrichtung nach einem der Ansprüche 1 bis 7, **dadurch gekennzeichnet, dass** an jeder Heckaußenseite (4) des Zugfahrzeugs (8) eine Kamera (2) angeordnet ist.

9. Vorrichtung nach Anspruch 8, **dadurch gekennzeichnet, dass** bei einem Winkel kleiner als 180 ° zwischen Zugfahrzeug (8) und Anhänger (7) eine der Kameras (2) mit dem Heck des Zugfahrzeugs (8) über die Außenseite des Anhängers (7) seitlich ausschwenkt.

10. Vorrichtung nach einem der Ansprüche 1 bis 9, **dadurch gekennzeichnet, dass** die mindestens eine Kamera (2) und/oder die mindestens eine Lichtquelle (3) an einem ausfahrbaren oder ausschwenkbaren Träger angeordnet ist.

## Claims

1. An apparatus for observing the area to the rear and side of a vehicle consisting of a tractor (8) and at least one trailer (7), said apparatus comprising at least one camera (2) and a monitor (10) disposed in the tractor (8) and the at least one camera (2) being pivot-mounted on the tractor (8), **characterized in that** the at least one camera (2) can be automatically aligned so as to lie parallel with the outside of the trailer (7).

2. An apparatus according to Claim 1, **characterized in that** the at least one camera (2) is disposed in the area (4) at the side and rear of the tractor (8).

3. An apparatus according to Claim 1 or 2, **characterized in that** the at least one camera (2) is adjusted as a function of the angle between tractor (8) and trailer (7).

4. An apparatus according to one of Claims 1 to 3, **characterized in that** the at least one camera (2) can be adjusted mechanically, electrically, pneumatically or hydraulically.

5. An apparatus according to one of Claims 1 to 4, **characterized in that** it has at least one light source (3).

6. An apparatus according to Claim 5, **characterized in that** the at least one light source is disposed so as to be adjustable together with or separately from the at least one camera (2).

7. An apparatus according to Claim 5 or 6, **characterized in that** the at least one light source (3) is disposed above or below the at least one camera (2).

8. An apparatus according to one of Claims 1 to 7, **characterized in that** a camera (2) is disposed on each outer side (4) at the rear of the tractor (8).

9. An apparatus according to Claim 8, **characterized in that,** with an angle of less than 180° between tractor (8) and trailer (7), one of the cameras (2), together with the rear of the tractor (8), swings out to the side beyond the outside of the trailer (7).

10. An apparatus according to one of Claims 1 to 9, **characterized in that** the at least one camera (2) and/or the at least one light source (3) is disposed on an extendable or swing-out support.

## Revendications

1. Dispositif pour la surveillance de l'espace arrière et latéral d'un véhicule composé d'un véhicule de traction (8) et d'au moins une remorque (7), avec au moins une caméra (2) et un moniteur (10) disposé dans le véhicule de traction (8), la au moins une caméra (2) étant montée à pivotement sur le véhicule de traction (8), **caractérisé en ce que** la au moins une caméra (2) est automatiquement orientable parallèlement au côté extérieur de la remorque (7).

2. Dispositif selon la revendication 1, **caractérisé en ce que** la au moins une caméra (2) est disposée dans la zone arrière latérale (4) du véhicule de traction (8).

3. Dispositif selon la revendication 1 ou 2, **caractérisé en ce que** le réglage de la au moins une caméra (2) s'effectue en fonction de l'angle entre le véhicule de traction (8) et la remorque (7).

4. Dispositif selon une des revendications 1 à 3, **caractérisé en ce que** le réglage de la au moins une caméra (2) peut s'effectuer mécaniquement, électriquement, pneumatiquement ou hydrauliquement.

5. Dispositif selon une des revendications 1 à 4, **caractérisé en ce qu'**il comporte au moins une source lumineuse (3).

6. Dispositif selon la revendication 5, **caractérisé en ce que** la au moins une source lumineuse est disposée avec la possibilité d'être ajustée conjointement avec la au moins une caméra (2) ou séparément de celle-ci.

7. Dispositif selon la revendication 5 ou 6, **caractérisé en ce que** la au moins une source lumineuse (3) est disposée au-dessus ou au-dessous de la au moins une caméra (2).

8. Dispositif selon une des revendications 1 à 7, **caractérisé en ce que** sur chaque côté extérieur arrière (4) du véhicule de traction (8) est disposée une caméra (2).

9. Dispositif selon la revendication 8, **caractérisé en ce que**, en présence d'un angle inférieur à 180° entre le véhicule de traction (8) et la remorque (7), une des caméras (2) sort latéralement avec l'arrière du véhicule de traction (8) au-delà du côté extérieur de la remorque (7).

10. Dispositif selon une des revendications 1 à 9, **caractérisé en ce que** la au moins une caméra (2) et/ou la au moins une source lumineuse (3) est disposée sur un support extensible ou sortant.
